# EUROPÄISCHE PATENTSCHRIFT

(11) **EP 3 959 393 B1**
(45) Veröffentlichungstag und Bekanntmachung des Hinweises auf die Patenterteilung: **07.06.2023**
(21) Anmeldenummer: 21700167.6
(22) Anmeldetag: 05.01.2021
(51) Int. Cl.: E04F 13/08

(54) **PLATTENBEFESTIGUNGSSYSTEM**
PANEL FASTENING SYSTEM
SYSTÈME DE FIXATION DE PANNEAUX

(30) Priorität: 04.05.2020 EP 20172661
(43) Veröffentlichungstag der Anmeldung: 02.03.2022
(73) Patentinhaber: Swisspearl Group AG, 8867 Niederurnen (CH)
(72) Erfinder: GERVASONI, Aristide, 8880 Walenstadt (CH)
(74) Vertreter: Frischknecht, Harry Ralph
(86) Internationale Anmeldenummer: PCT/EP2021/050068
(87) Internationale Veröffentlichungsnummer: WO 2021/223916

(56) Entgegenhaltungen:
- FR-A1- 2 985 276
- NL-A- 9 400 706

## Beschreibung

### TECHNISCHES GEBIET

Die vorliegende Erfindung betrifft ein Plattenbefestigungssystem nach dem Oberbegriff von Anspruch 1 und ein Verfahren zur Bereitstellung eines Plattenbefestigungssystems nach Anspruch 16.

### STAND DER TECHNIK

Aus dem Stand der Technik sind viele Systeme bekannt geworden, mit welchen eine Platte mit weiteren Elementen verbunden werden kann. Eine Platte ist beispielsweise eine Fassadenplatte, die mit einer Unterkonstruktion zu verbinden ist. Aber auch bei anderen Anwendungen wie Innenbaubekleidungen, Plattenverbindungen untereinander, etc. ergeht das Problem der Montage.

Grundsätzlich möchte man die Platte so montieren, dass die Befestigungsmittel von der Sichtseite nicht sichtbar sind. Aus dem Stand der Technik sind viele Lösungen bekannt. Beispielsweise offenbar die NL 1000265 C2 eine Nute, in welcher eine Befestigungsmittel eingefahren wird, wobei die Nute auf der Rückseite einer Platte angeordnet ist. Nachteilig an der technischen Lehre der NL 1000265 C2 ist, dass die Schraube sich in der Nute während der Montage bewegen kann, was den Montagevorgang erschwert.

Ein weiteres gattungsgemäßes Plattenbefestigungssystem ist ferner aus der NL9400706 A bekannt.

### DARSTELLUNG DER ERFINDUNG

Ausgehend von diesem Stand der Technik liegt der Erfindung eine Aufgabe zugrunde, ein Plattenbefestigungssystem anzugeben, welches die Nachteile des Standes der Technik überwindet. Insbesondere ist es eine bevorzugte Aufgabe der vorliegenden Erfindung, ein Plattenbefestigungssystem anzugeben, welches einfacher montiert werden kann.

Diese Aufgabe wird durch das Plattenbefestigungssystem nach Anspruch 1 gelöst. Demgemäss umfasst ein Plattenbefestigungssystem eine Platte, insbesondere eine Faserzementplatte, mit einer Sichtseite und einer Rückseite, mindestens eine in die Rückseite der Platte eingebrachte und sich entlang einer Längsachse erstreckende Nute, mit mindestens einer Anschlagsfläche, wobei zwischen der mindestens einen Anschlagsfläche und der Rückseite sich ein erster Nutenabschnitt erstreckt und wobei zwischen der mindestens einen Anschlagsfläche und dem Nutengrund sich ein zweiter Nutenabschnitt erstreckt, und mindestens ein in die Nute eingesetztes Befestigungselement mit einem Befestigungsabschnitt und einer Kontaktfläche, wobei das Befestigungselement mit der Kontaktfläche an der mindestens einen Anschlagsfläche anschlägt.

Weiter umfasst das Plattenbefestigungssystem mindestens ein in der Nute anordbares Sicherungselement, wobei das mindestens eine Befestigungselement durch das mindestens eine Sicherungselement gegen eine Bewegung in Richtung der Längsachse gesichert ist. Mit anderen Worten gesagt wird das Befestigungselement durch das Sicherungselement in der Nute bezüglich einer Bewegung in Richtung der Längsachse festgelegt, derart, dass das Befestigungselement in Richtung der Längsachse nicht relativ zur Nute verschoben wird.

Durch die Anordnung des Sicherungselements ergeht der Vorteil, dass das Befestigungselement in der Nute an einer Bewegung in der Nute gesichert ist. Somit kann die Platte des Plattenbefestigungssystems einfacher befestigt werden.

Die Anschlagsfläche in der Nute bildet einen Anschlag gegen eine Auszugskraft, welche im Wesentlichen rechtwinklig zur Rückseite auf das Befestigungselement wirkt.

Weiter kann die Platte in allen Raumlagen unabhängig von der Orientierung der Nute montiert werden. Bei einer Fassadenplatte kann die Platte derart montiert werden, dass sich die Nute in der horizontalen Richtung, in der vertikalen Richtung oder winklig geneigt zur Horizontalen oder Vertikalen erstreckt, ohne dass es zu einem Verrutschen des Befestigungselements in der Nute kommen würde. Letzteres hätte den Nachteil, dass sich schlussendlich die Platte relativ zur Unterkonstruktion verschieben könnte.

Ein weiterer Vorteil ist auch, dass die Montage der Platte mit den Befestigungselementen einfacher wird, weil die Befestigungselemente durch das Sicherungselement lagefixiert zur Platte liegen.

Ein weiterer Vorteil ergeht bei der Lagerung und beim Transport des Plattenbefestigungssystems. Das mindestens eine Befestigungselement ist in die Nute einschiebbar. Weiter ist das mindestens ein Sicherungselement in der Nut anordbar. Das heisst, die Platte, das mindestens eine Befestigungselement und das mindestens eine Sicherungselement können separat voneinander gelagert und transportiert werden. Gerade gegenüber fest in Platten eingebrachten Befestigungselementen ist dies ein Vorteil, weil die Platten flächig aufeinander ohne Distanzhalter zum Schutz der Befestigungselemente transportierbar sind.

Das Befestigungselement schlägt derart an der Anschlagsfläche an, dass eine auf das Befestigungselement wirkende Zugkraft in Richtung einer Flächennormalen auf die Rückseite und vom der Rückseite weg über die Anschlagsfläche in die Platte einleitbar ist.

Die Breite des ersten Nutenabschnittes quer zur Längsrichtung gesehen ist kleiner als die Breite des zweiten Nutenabschnittes. Als Breite wird der Abstand quer zur Längsachse zwischen den Seitenwänden der jeweiligen Nutenabschnitte gesehen.

Das Befestigungselement liegt im Wesentlichen im zweiten Nutenabschnitt. Je nach Ausbildung kann sich das Befestigungselement durch den ersten Nutenabschnitt hindurch erstrecken.

Die hierin verwendeten Ausdrucksweisen horizontal und vertikal verstehen sich als in die jeweilige Raumrichtung verlaufende Richtungen in Einbaulage der Platte. Die Horizontale ist dabei rechtwinklig zur Richtung der Schwerkraft und die Vertikale ist parallel zur Richtung der Schwerkraft.

Das Plattenbefestigungssystem kann für verschiedene Anwendungen eingesetzt werden. Besonders bevorzugt für Fassadenplatten oder Innenbaubekleidungen. Das Plattenbefestigungssystem kann aber auch eingesetzt werden, um zwei Platten miteinander zu verbinden.

Bei der Platte handelt es sich bevorzugt um eine Faserzementplatte. Faserzementplatten bestehen typischerweise aus Zement und zugfesten Fasern. Derartige Platten werden typischerweise nach dem Hatschek-Verfahren hergestellt. Die Platte kann aber auch aus einem anderen Material sein. Beispielhaft werden hier Holz, Naturschiefer, Naturstein (z.B. Granit, Gneis, Quarzit, Porphyr, Sandstein oder Marmor), Keramik (z.B. Feinsteinzeug, Steinzeug, Cotto), faserverstärkter Feinbeton (z.B. Cemfor, Rebeton), faserverstärkter Schiefer-/ Gesteinssplit (z.B. Cottostone), faserverstärkte Schichtstoffe, Metalle (z.B. beschichtete Stahlbleche, Kupfertitan-Zink, Aluminium, Kupfer oder Chromstahl), Schichtverbundmaterialien (Laminate z.B. Alucobond), Glas oder vollflächig verputzte Trägerplatten, genannt.

Grundsätzlich sind homogene, organische und anorganische Materialien oder Kombinationen, wie Faserverbundstrukturen oder Schichtverbundstrukturen, einsetzbar.

Die geometrischen Abmessungen, wie Dicke, Format, oder das Erscheinungsbild, wie Farbe, der Platte sind vom hierin vorgeschlagenen Befestigungskonzept unabhängig. Ebenso kann die Sichtseite mit ästhetischen Elementen, wie Farben oder Oberflächenstrukturen, versehen sein.

Die Zahl der Nuten und die Abstände zwischen einzelnen Nuten ist im Wesentlichen von der Grösse und Form der Platte sowie der damit verbundenen statischen Notwendigkeit zur Verbindung mit der Unterkonstruktion abhängig.

Die Nut ist derart in die Platte eingebracht, dass sie von der Sichtseite nicht sichtbar ist. Das heisst die Tiefe der Nut ist kleiner als die Plattendicke.

Die Sichtseite und die Rückseite verlaufen parallel zueinander und der Abstand zwischen Sichtseite und Rückseite definiert die Dicke der Platte.

Vorzugsweise weist die Nute mindestens ein Endbereich auf, wobei das Befestigungselement im Endbereich angeordnet ist, und wobei sich das Sicherungselement vom Befestigungselement in Richtung der Längsachse wegerstreckt.

Das Befestigungselement vorzugsweise zwischen dem Endbereich und dem Befestigungselement festgelegt bzw. eingeklemmt.

Der Endbereich der Nute ist der Bereich, welcher in Richtung der Längsachse gesehen, das Nutenende ist. Der Endbereich weist dabei vorzugsweise Endflächen auf, an welche das Befestigungselement anschlägt. Die Endflächen stehen dabei, je nach Ausbildung der Nut, mindestens teilweise quer zur Längsachse.

Besonders bevorzugt weist die Nute zwei Endbereiche auf. In einer Variante ist in jedem der beiden Endbereiche jeweils ein Befestigungselement angeordnet, wobei sich das Sicherungselement vom einen der Befestigungselemente zum anderen der Befestigungselemente erstreckt. In dieser Variante werden die beiden Befestigungselement durch das Sicherungselement in einem determinierten Abstand gehalten und gegen den Endbereich festgelegt bzw. geklemmt.

In einer anderen Variante ist nur in einem der beiden Endbereiche ein Befestigungselement angeordnet, wobei sich das Sicherungselement vom Befestigungselement zum gegenüberliegenden Endbereich erstreckt. Das Sicherungselement erstreckt sich in dieser Variante im Wesentlichen vom gegenüberliegenden Endbereich bis hin zum Befestigungselement und verhindert so eine Bewegung des Befestigungselements in der Nute.

Vorzugsweise weist die Nute eine weitere Anschlagsfläche auf und das Sicherungselement weist eine Fläche auf, wobei wenn das Sicherungselement in die Nute eingesetzt wird, die Fläche in Kontakt mit der weiteren Anschlagsfläche kommt, derart, dass das Sicherungselement an einer Bewegung in Richtung der Längsachse gehindert ist.

Durch den Anschlag der Fläche des Sicherungselements an der Anschlagsfläche ergeht der Vorteil, dass das Sicherungselement zusätzlich bezüglich einer Längsbewegung in der Nute gesichert ist.

Vorzugsweise weist die Nute eine Montageöffnung auf, über welche das mindestens eine Befestigungselement in die Nute einsetzbar ist, wobei der Durchmesser der Montageöffnung quer zur Längsachse gesehen im Wesentlichen der Breite des zweiten Nutenabschnitts entspricht.

Vorzugsweise befindet sich die Montageöffnung mittig zwischen den beiden Endbereichen der Nut.

Vorzugsweise wird die oben genannte weitere Anschlagsfläche durch die Fläche der Montageöffnung bereitgestellt.

In einer Variante verläuft die Anschlagsfläche der Nut vorzugsweise parallel zur Rückseite. In einer anderen Variante verläuft die Anschlagsfläche der Nut winklig geneigt zur Rückseite.

Die Variante, bei welcher die Nut parallel zur Rückseite verläuft weist den Vorteil auf, dass oberhalb der Anschlagsfläche, also seitlich zum ersten Nutenabschnitt, keine weitere Materialschwächung erfolgt.

Die Variante, bei welcher die Nut winklig geneigt zur Rückseite verläuft weist den Vorteil auf, dass die auf das Befestigungselement wirkenden Zugkräfte besser in die Platte geleitet werden können.

Vorzugsweise erstreckt sich die Anschlagsfläche in den Endbereichen von oben auf die Sichtseite gesehen jeweils teilkreisförmig um das Nutenende herum. Geometrisch gesehen kann die Anschlagsfläche die Form eines Teils einer Ringfläche oder die Form eines Teils eines Kegelmantels haben.

Vorzugsweise erstreckt sich die Anschlagsfläche der Nut beidseitig zum ersten Nutenabschnitt erstreckt.

Besonders bevorzugt weist die Nute die Form einer T-Nute oder die Form einer Schwalbenschwanznute auf. Andere Formen sind auch denkbar.

Vorzugsweise ist das Sicherungselement als mindestens ein Einlegeteil ausgebildet. Das Einlegeteil wird in die Nute eingelegt. Das Einlegeteil kann dann nach erfolgtem Einlegen des mindestens einen Befestigungselements in die Nute eingelegt werden.

Das Einlegeteil ist dabei als separates Element ausgebildet, das heisst, das Einlegeteil ist separat zum Befestigungselement und zur Nut bzw. zur Platte.

Vorzugsweise ist das Einlegeteil aus Kunststoff. Vorzugsweise füllt das Einlegeteil die Nut im Bereich zwischen zwei Befestigungselementen oder im Bereich zwischen einem Befestigungselement und einem Endbereich vollständig aus.

Vorzugsweise weist das Einlegeteil mindestens an einer Endseite einen Flächenbereich auf, welcher an das mindestens eine Befestigungselement anlegbar ist.

Vorzugsweise weist das Einlegeteil zwei Einlegeabschnitte auf, welche über ein Filmscharnier miteinander in Verbindung stehen, wobei die Einlegeabschnitte um das Filmscharnier relativ zueinander verschwenkbar sind, wobei bei zusammengeklappten Einlegeabschnitt das Einlegeteil in die Nute einsetzbar ist und wobei während des Einsetzens die Einlegeabschnitte mit dem Nutengrund in Kontakt bringbar sind, derart, dass die Einlegeabschnitte bei weiterem Einsetzen des Einlegeteils in die Nut in den Bereich zwischen Anschlagsfläche und Nutengrund einschiebbar sind.

Unter der Ausdrucksweise "Filmscharnier" wird eine Materialzone verstanden, die nur eine geringe Dicke aufweist, so dass die beiden Einlegeabschnitte relativ zueinander verschwenkbar sind.

Vorzugsweise weist das Einlegeteil oberseitig einen zylindrischen Abschnitt auf, welcher in die Montageöffnung zu liegen kommt. Der zylindrische Abschnitt weist die oben genannte Fläche auf, welche an der weiteren Anschlagsfläche ansteht.

Vorzugsweise weist das Sicherungselement weiterhin eine Öffnung auf, welche derart angeordnet ist, dass das Sicherungselement ausbaubar ist. Die Öffnung ist vorzugsweise so angeordnet, dass ein hakenartiges Werkzeug durch die Öffnung geführt werden kann, so dass das Sicherungselement über das Filmscharnier zusammenklappbar ist. Vorzugsweise durchdringt die Öffnung das Filmscharnier.

In einer zum Einlegeteil alternativen Ausführungsform ist das Sicherungselement eine zähflüssige in die Nute einzubringende Masse, welche in der Nute aushärtbar ist. Die Nute wird dabei nach dem Einsetzen des Befestigungselements mit der Masse im Wesentlichen vollständig ausgefüllt, wobei nach dem Aushärten der Masse ein weiteres Bewegen des Befestigungsmittels verunmöglicht wird.

Die Masse kann beispielsweise durch folgende Materialien bereitgestellt werden:
- Aushärtender Klebstoff, insbesondere flüssig oder pastös
- Lösemittelhaltige Klebstoffe
- Dispersions- und Pulverklebstoffe,
- 1-komponentige Polyurethan-Klebstoffe (1K-PUR),
- 2-komponentige Polyurethan-Klebstoffe (2K-PU),
- Epoxidharz-Klebstoffe,
- Hybrid-Klebstoffe,
- Trockenklebstoffe,
- Schmelzklebstoffe,
- Cyanacrylatklebstoffe,
- Anaerobe Klebstoffe,
- Ausgleichsmörtel,
- Harze, wie Acryl-, Polyurethan-, Epoxyd-, Polyester-, Beton-Giessharze, Vinylesterharze,Silikonharze, Phenoplaste, Methacrylatharze

In einer Variante weist der Befestigungsabschnitt ein Innengewinde auf, wobei der Nenndurchmesser des Innengewindes kleiner als die Breite des ersten Nutenabschnitts ist. Das Innengewinde kann in einen Eingriff mit dem Aussengewinde einer Schraube kommen. Vorzugsweise weist der Befestigungsabschnitt ein Aussengewinde auf, welches sich aus der Nute über die Rückseite hinaus erstreckt.

Vorzugsweise weist die Nute von der Rückseite bis zum Nutengrund eine Tiefe auf, welche derart gewählt ist, dass eine Restwanddicke verbleibt.

Die Dicke der Platte definiert sich als Abstand zwischen Sichtseite und Rückseite. Bei einer Faserzementplatte ist die Dicke vorzugsweise zwischen 4 Millimetern und 20 Millimetern. Insbesondere zwischen 8 Millimetern oder 12 Millimetern. Bei Faserzement ist die minimale Restwanddicke vorzugsweise bei 2 Millimetern.

Ein Verfahren zur Bereitstellung eines Plattenbefestigungssystems nach obiger Beschreibung ist dadurch charakterisiert, dass in einem ersten Schritt das mindestens eine Befestigungselement in die Nute eingesetzt wird und dass in einem zweiten, dem ersten Schritt nachfolgenden Schritt, das Sicherungselement in der Nute angeordnet wird.

Bei der Herstellung der Platte wird auf der Rückseite die Nut vorzugsweise über eine Fräsvorgang eingebracht.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht und eine Detailansicht eines Plattenbefestigungssystems mit einer Platte, mindestens einer Nute, mindestens einem Befestigungselement und mindestens einem Sicherungselement;
- Fig. 2: eine perspektivische Ansicht der Nute nach Figur 1;
- Fig. 3: eine perspektivische Ansicht der Nute nach Figur 1 mit eingesetzten Befestigungselementen;
- Fig. 4: eine perspektivische Ansicht der Nute nach Figur 1 mit eingesetzten Befestigungselementen und teilweise eingesetztem Sicherungselement;
- Fig. 5: eine perspektivische Ansicht der Nute nach Figur 1 mit eingesetzten Befestigungselementen und vollständig eingesetztem Sicherungselement;
- Fig. 6: eine Schnittdarstellung durch die Längsachse der Nute gemäss der vorhergehenden Figuren;
- Fig. 7: eine perspektivische Ansicht des Sicherungselements gemäss den vorhergehenden Figuren im zusammengeklappten Zustand;
- Fig. 8: eine perspektivische Ansicht des Sicherungselements gemäss den vorhergehenden Figuren im eingesetzten Zustand;
- Fig. 9: eine perspektivische Ansicht des Plattenbefestigungssystems mit anderen Befestigungselementen;
- Fig. 10: eine perspektivische Ansicht eines Sicherungselements gemäss einer weiteren Ausführungsform;
- Fig. 11: eine perspektivische Ansicht der Nute mit eingesetzten Befestigungselementen und teilweise eingesetztem Sicherungselement gemäss Figur 10;
- Fig. 12: die Ansicht gemäss Figur 11 mit vollständig eingesetztem Sicherungselement und
- Fig. 13: eine Ansicht gemäss Figur 12 von oben.

### BESCHREIBUNG BEVORZUGTER AUSFÜHRUNGSFORMEN

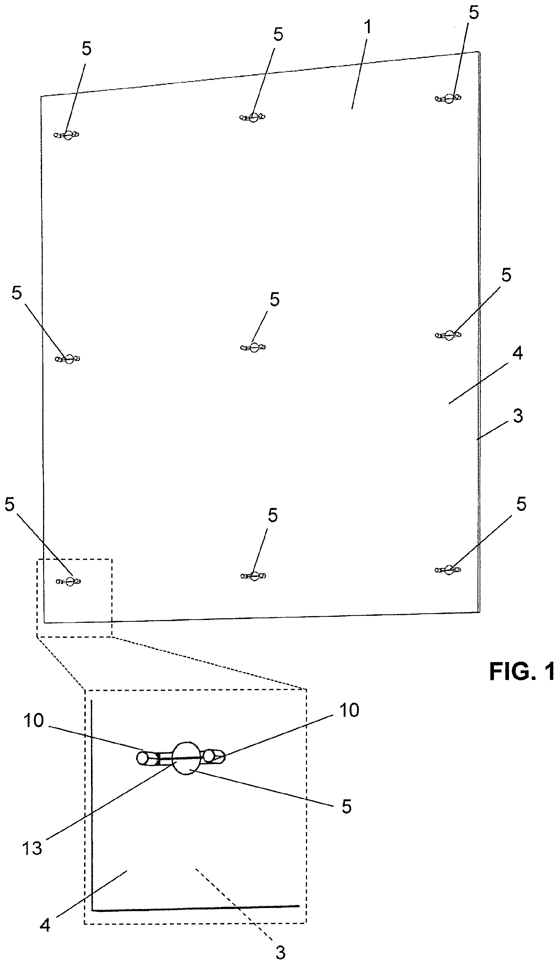

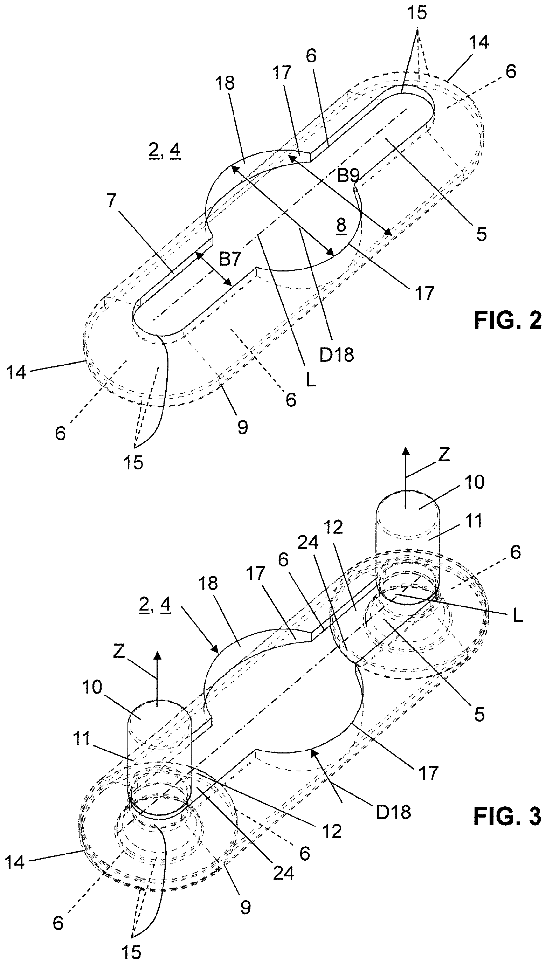

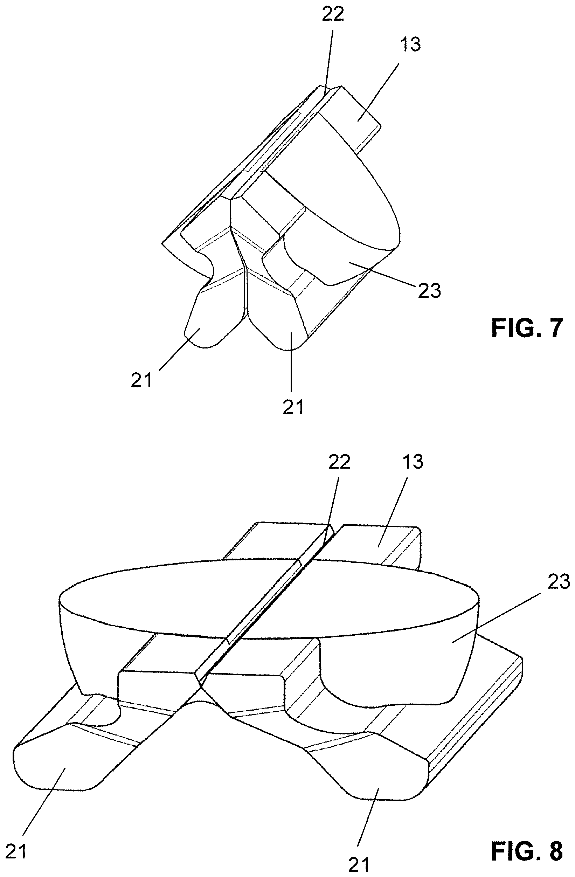

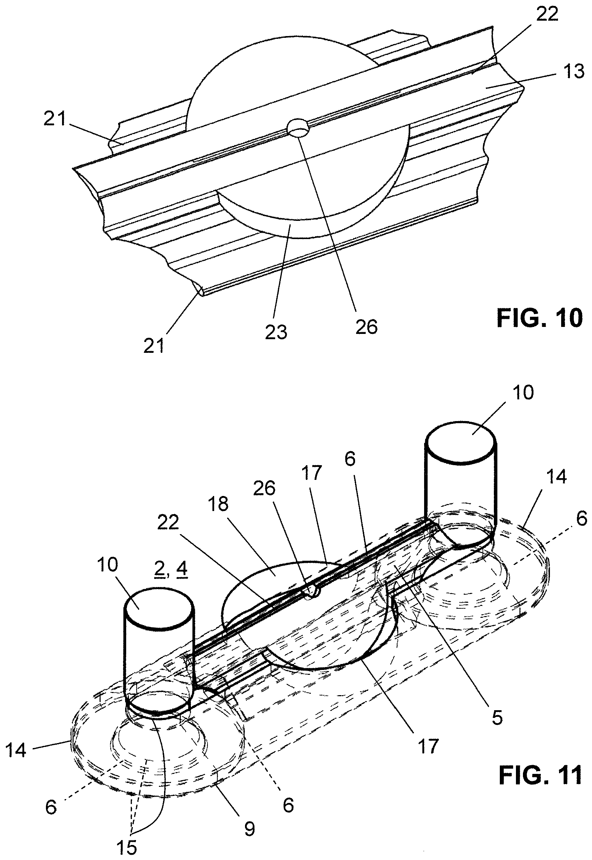

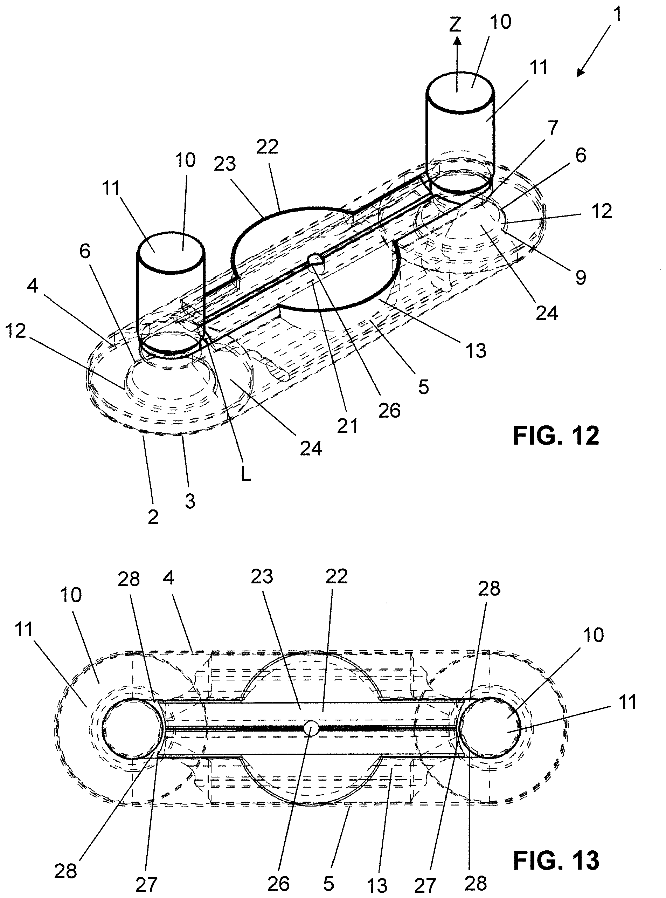

In den Figuren wird ein Plattenbefestigungssystem 1 gemäss einer bevorzugten Ausführungsform der vorliegenden Erfindung gezeigt. Das Plattenbefestigungssystem 1 wird in der Figur 1 gesamthaft und in den Figuren 2 bis 6 ausschnittsweise dargestellt. Die Figuren 7 bis 8 zeigen ein Sicherungselement 13 gemäss einer Ausführungsform für das Plattenbefestigungssystem 1. In den Figuren 10 bis 13 wird das Plattenbefestigungssystem 1 mit einem Sicherungselement gemäss einer weiteren Ausführungsform gezeigt.

Das Plattenbefestigungssystem 1 gemäss allen Figuren umfasst eine Platte 2 mit einer Sichtseite 3 und einer Rückseite 4. Die Platte ist vorzugsweise eine Faserzementplatte. Die Platte kann aber auch aus anderen Materialien sein. Die Sichtseite 3 und die Rückseite 4 verlaufen parallel zueinander. Der Abstand zwischen der Sichtseite 3 und der Rückseite 4 definiert die Dicke der Platte 2. Die Sichtseite 3 ist dabei die Frontseite, welche nach Montage der Platte 2 typischerweise sichtbar ist. Die Rückseite 4 der Platte 2 ist die Seite, welche typischerweise gegen eine Unterkonstruktion orientiert ist.

Über die Rückseite 4 der Platte 2 ist mindestens eine Nute 5 in die Platte 2 eingearbeitet. Die Zahl der Nuten 5 ist im Wesentlichen von der Plattengrösse abhängig. Die Zahl der Nuten 5 definiert die Zahl der Befestigungspunkte einer Platte 2. Je grösser die Platte 2, desto grösser ist die Zahl der Nute 5 bzw. der Befestigungspunkte. Die Nute 5, welche in der Figur 2 im Detail dargestellt wird, erstreckt sich entlang einer Längsachse L. Die Nute 5 weist eine Anschlagsfläche 6 auf. Von der Rückseite 4 bis hin zur Anschlagsfläche 6 erstreckt sich die Nute 5 mit einem ersten Nutenabschnitt 7. Von der Anschlagsfläche 6 bis hin zum Nutengrund 8 erstreckt sich die Nute 5 mit einem zweiten Nutenabschnitt 9. Die Breite B7 des ersten Nutenabschnitts ist kleiner als die Breite des zweiten Nutenabschnitts 9.

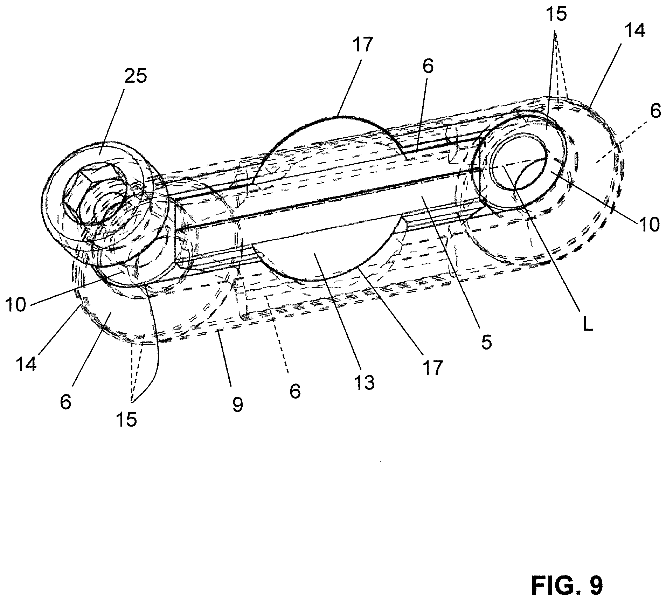

Weiter umfasst das Plattenbefestigungssystem 1 mindestens ein die Nute 5 eingesetztes Befestigungselement 10. In der gezeigten Ausführungsformen sind pro Nute 5 jeweils zwei Befestigungselemente 10 angeordnet. Das Befestigungselement 10 umfasst einen Befestigungsabschnitt 11. Der Befestigungsabschnitt 11 ist hier in den Figuren 1 bis 8 als Gewindebolzen ausgebildet, kann aber in anderen Ausführungsformen, wie in der Figur 9 gezeigt, auch die Form einer Gewindemutter habe. Das Befestigungselement 10 umfasst weiterhin eine Kontaktfläche, mit welcher das Befestigungselement 10 an der besagten Anschlagsfläche 6 der Nut 5 anschlägt. Die Anschlagsfläche 6 ist hier Teil eines Flansches 24, der sich dem Befestigungsabschnitt 11 anschliesst. Der Flansch 24 weist einen grösseren Durchmesser als der Befestigungsabschnitt 11 auf und liegt hier im zweiten Nutenabschnitt 9.

Zudem umfasst das Plattenbefestigungssystem 1 mindestens ein Sicherungselement 13, welches Sicherungselement 13 in der Nut 5 anordbar ist. In den Figuren 1 bis 9 wird eine erste Ausführungsform des Sicherungselements und in den Figuren 10 bis 13 wird eine zweite Ausführungsform des Sicherungselements gezeigt. Gleiche Merkmale sind mit gleichen Bezugszeichen versehen und die Beschreibung der einen Ausführungsform ist auf die Beschreibung der anderen Ausführungsform anwendbar. Durch das Sicherungselement 13 ist das mindestens eine Befestigungselement 10 gegen eine Bewegung in Richtung der Längsachse L gesichert ist. Mit dem Sicherungselement 13 wird das mindestens eine Befestigungselement bezüglich einer Bewegung in Richtung der Längsachse L fest in der Nut 5 gehalten.

Anhand der Figuren 2 bis 5 wird nun erläutert, wie die Befestigungselemente 10 und das Sicherungselement 13 in der Nute 5 der Platte 2 positioniert werden.

In der Figur 2 wird die Nute 5, wie oben beschrieben genauer dargestellt. Hier umfasst die Nute 5 weiterhin eine Montageöffnung 18. Die Montageöffnung 18 liegt hier mittig zwischen den beiden Endbereichen 14 der Nut 5. Die Endbereich 14 der Nute 5 sind gerundete ausbildet und schliessen die Nute 5 in ihrer Längsrichtung entsprechend ab. Der Durchmesser D18 der Montageöffnung 18 entspricht im Wesentlichen der Breite B9 des zweiten Nutenabschnitts 9.

Über die Montageöffnung 18 werden die Befestigungselemente 10 einzelnen in die Nute 5 eingesetzt und können dann in Richtung der Längsachse L zum jeweiligen Endbereich 14 bewegt werden. In der Figur 3 liegen die beiden Befestigungselement 10 jeweils in einem Endbereich 14 der Nute 5. Hierbei sind die Befestigungselemente 10 in flächigem Kontakt mit den entsprechenden Endbereichen 14.

Sobald die Befestigungselemente 10 an der richtigen Stelle liegen, kann das Sicherungselement 13 eingesetzt werden. Das Sicherungselement 13 kann ein Einlegeteil sein, so wie dies in den Figuren dargestellt und unten noch erläutert wird. Alternativ kann das Sicherungselement 13 aber auch eine aushärtbare Masse sein, die in die Nute 5 eingefüllt wird und dann dort aushärtet.

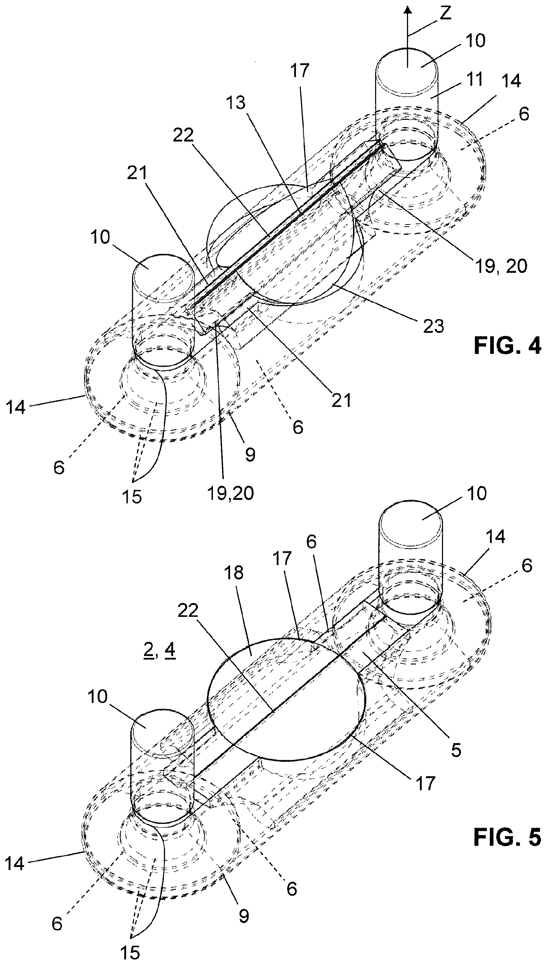

In der Figur 4 wird das Einsetzen des Einlegeteils genauer gezeigt. Das Einlegeteil umfasst in der gezeigten Ausführungsform zwei Einlegeteilabschnitte 21, welche in der Figur 4 im zusammengeklappten Zustand dargestellt sind. In diesem zusammengeklappten Zustand ist das Einlegeteil von oben her, also von Seiten der Rückseite 4 in die Nute 5 einsetzbar Hierfür wird das Einlegeteil durch den ersten Nutenabschnitt 7 geführt. Sodann kommen die Einlegteilabschnitte 21 mit dem Nutengrund 8 in Kontakt. Durch ein weiteres Einschieben des Einlegeteils, bewegen sich die Einlegeteilabschnitte 21 in den zweiten Nutenabschnitt 9 unter die Anschlagsfläche 6.

In der Figur 5 wird gezeigt, dass das als Einlegeteil ausgebildete Sicherungselement 13 den gesamten Innenraum der Nute 5 zwischen den beiden Befestigungselementen 10 ausfüllt, derart, dass das Einlegeteil einer Bewegung der Befestigungselemente 10 entlang der Längsachse L aufeinander zu, entgegensteht. Das Sicherungselement 13 bildet demnach einen Anschlag gegen das Verschieben der beiden Befestigungselemente 10.

Das Sicherungselement 13 liegt vorzugsweise derart in der Nute, dass sich dieses nicht über die Rückseite 4 aus der Nute 5 hinaus erstreckt. Hierdurch wird sichergestellt, dass das Sicherungselement 13 den Montagevorgang des Plattenbefestigungssystems 1 nicht beeinträchtigt.

Die Anschlagsfläche 6 in der Nute 5 bildet einen Anschlag gegen eine Auszugskraft Z, welche im Wesentlichen rechtwinklig zur Rückseite 4 auf das Befestigungselement 10 wirkt.

In der gezeigten Ausführungsform weist die Nute 5 eine weitere Anschlagsfläche 16 auf. Die weitere Anschlagsfläche 16 wird hier durch die Seitenwand der Montageöffnung bereitgestellt. Weiter weist das Sicherungselement 13 eine Fläche 17 auf, wobei wenn das Sicherungselement 13 in die Nute 5 eingesetzt wird, die Fläche 17 in Kontakt mit der weiteren Anschlagsfläche 16 kommt, derart, dass das Sicherungselement 13 an einer Bewegung in Richtung der Längsachse L gehindert ist. Durch den Kontakt zwischen der weiteren Anschlagsfläche 16 und der Fläche 17 ergeht zudem der Vorteil, dass auch nur ein Befestigungselement 10 eingesetzt werden kann, wobei das Sicherungselement 13 gleichermassen wirkt.

Durch die Anordnung der Befestigungselemente 10 in den Endbereichen 14 der Nute 5 ergeht zudem der Vorteil, dass die eigentliche Überdeckungsfläche zwischen Anschlagsfläche 5 und Kontaktfläche 12 vergrössert wird. In der gezeigten Ausführungsform ist die eigentliche Überdeckungsfläche Anschlagsfläche 5 und Kontaktfläche 12 von oben gesehen im Wesentlichen ringförmig, wobei der Ring durch die Nut 5, insbesondere den ersten Nutenabschnitt 7 unterbrochen ist.

Die Endbereiche 14 weisen hier eine gerundete Endflächen 15 auf, an welchen das Befestigungselement 10 ansteht.

In der gezeigten Ausführungsform handelt es sich bei der Nut im Wesentlichen um eine Schwalbenschanznut, wobei die Anschlagsfläche 6 in einem Winkel winklig geneigt zur Rückseite 4 verläuft. Der Winkel liegt zwischen 15° und 75°. Durch die winklige Anordnung der Anschlagsfläche 6 ergeht der Vorteil, dass die Auszugskraft Z gut in die Platte 2 eingeleitet wird.

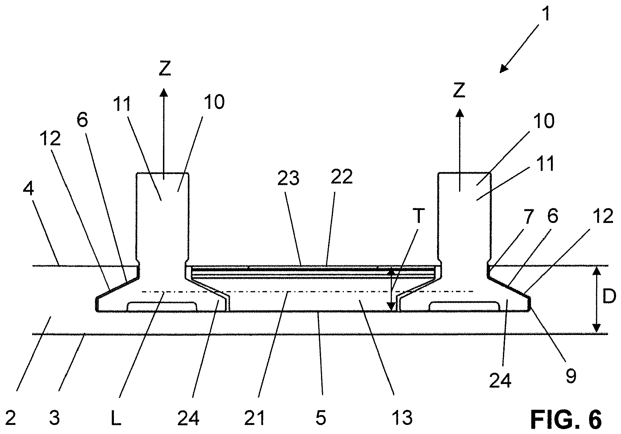

In der Figur 6 wird ein Querschnitt durch die Längsachse L gezeigt. Vom Querschnitt der Figur 6 kann die winklige Anordnung der Anschlagsfläche 6 gut erkannt werden. Die Kontaktfläche 12 ist ebenfalls winklig angeordnet, so dass Anschlagsfläche 6 und Kontaktfläche 12 in flächigem Kontakt miteinander sind. Weiter weist das Sicherungselement 13 im Bereich seiner zwei Endseiten 19 einen Flächenbereich 20 auf, welcher mit dem mindestens einen Befestigungselement 10 in Verbindung bringbar ist. Der Flächenbereich 20 weist eine Formgebung auf, welche zur Form der Kontaktfläche 12 passend ausgebildet ist.

In der Figur 6 wird weiter gezeigt, dass sich das Sicherungselement 13 vollständig im Innenraum der Nute 5 befindet und nicht über die Rückseite 4 hervorsteht.

Die Dicke D der Platte 2 ist in der Figur 6 ebenfalls eingezeichent. Die Nute weist von der Rückseite 4 der Platte 2 her gesehen eine Tiefe T auf, welche nicht mehr als 50% der Dicke D der Platte 2 entspricht.

In den Figuren 7 und 8 wird eine spezifische Variante des Sicherungselements in der Form des Einlegeteils genauer gezeigt. Das Einlegeteil weist, wie erwähnt zwei Einlegeabschnitte 21 auf, welche über ein Filmscharnier 22 miteinander in Verbindung stehen, wobei die Einlegeabschnitte 21 um das Filmscharnier 22 relativ zueinander verschwenkbar sind. Das Filmscharnier 22 wird durch eine dünne Wandung zwischen den beiden Einlegeabschnitten 21 bereitgestellt.

In der Figur 7 werden die Einlegeabschnitt im zusammengeklappten Zustand gezeigt. Im zusammengeklappten Zustand liegen die Einlegeabschnitte 21 einander an und das Einlegeteil ist mit den Einlegeabschnitten 21 voran in die Nute 5 einsetzbar. Während des Einsetzens sind die Einlegeabschnitte 21 mit dem Nutengrund 8 in Kontakt bringbar sind, derart, dass die Einlegeabschnitte 21 bei weiterem Einsetzen des Einlegeteils in die Nut in den Bereich zwischen Anschlagsfläche 6 und Nutengrund 8 einschiebbar sind. Dies ist dann der Zustand, wie er in der Figur 8 dargestellt wird.

Wie erwähnt zeigt die Figur 9 Befestigungselement 10 in der Form einer Gewindemutter, in welche eine Schraube 25 eingeschraubt werden kann. Alle anderen Elemente sind identisch ausgebildet und es wird auf obige Beschreibung verwiesen.

Das Sicherungselement 13 gemäss der zweiten Ausführungsform nach den Figuren 10 bis 13 wird in gleicher Art und Weise in die Nute 5 eingesetzt wie das Sicherungselement der ersten Ausführungsform nach den Figuren 1 bis 9.

Das Sicherungselement 13 gemäss den Figuren 10 bis 13 weist weiterhin eine Öffnung 26 auf. Die Öffnung 26 ist derart angeordnet, dass mit einem hakenartigen Werkzeug das Sicherungselement 13 wieder ausbaubar ist. Die Öffnung 26 erstreckt sich in der gezeigten Ausführungsform durch das Filmscharnier 22.

Weiter weist das Sicherungselement 13 im Bereich des Befestigungselements 10 eine Rundung 27 auf. Durch die Rundung 27 ergeht der Vorteil, dass die Kontaktfläche zwischen dem Sicherungselement 13 und dem Befestigungselement 10 optimiert werden kann. Das Sicherungselement 13 erstreckt sich somit in die beiden Lücken 28 zwischen dem äusseren Durchmesser und ersten Nutenabschnitt 7 hinein.

Ferner weist das Sicherungselement 13 gemäss der zweiten Ausführungsform im Bereich der Einlegabschnitte 21 eine Form auf, welche eine etwas grössere Überdeckung des Flansches 24 bewirkt.

**BEZUGSZEICHENLISTE**

| | | | |
|---|---|---|---|
| 1 | Plattenbefestigungssystem | 26 | Öffnung |
| 2 | Platte | 27 | Rundung |
| 3 | Sichtseite | 28 | Lücke |
| 4 | Rückseite | | |
| 5 | Nute | L | Längsachse |
| 6 | Anschlagsfläche | B7 | Breite erster Nutenabschnitt |
| 7 | erste Nutenabschnitt | B9 | Breite zweiter Nutenabschnitt |
| 8 | Nutengrund | D18 | Durchmesser der Montageöffnung |
| 9 | zweiter Nutenabschnitt | | |
| 10 | Befestigungselement | Z | Ausziehkraft |
| 11 | Befestigungsabschnitt | | |
| 12 | Kontaktfläche | | |
| 13 | Sicherungselement | | |
| 14 | Endbereich | | |
| 15 | Endflächen | | |
| 16 | weitere Anschlagsfläche | | |
| 17 | Fläche | | |
| 18 | Montageöffnung | | |
| 19 | Endseite | | |
| 20 | Flächenbereich | | |
| 21 | Einlegeabschnitt | | |
| 22 | Filmscharnier | | |
| 23 | zylindrischer Abschnitt | | |
| 24 | Flansch | | |
| 25 | Schraube | | |

## Patentansprüche

1. Plattenbefestigungssystem (1) umfassend
eine Platte (2), insbesondere eine Faserzementplatte, mit einer Sichtseite (3) und einer Rückseite (4),
mindestens eine in die Rückseite (4) der Platte (2) eingebrachte und sich entlang einer Längsachse (L) erstreckende Nute (5), mit mindestens einer Anschlagsfläche (6), wobei zwischen der mindestens einen Anschlagsfläche (6) und der Rückseite (4) sich ein erster Nutenabschnitt (7) erstreckt und wobei zwischen der mindestens einen Anschlagsfläche (6) und dem Nutengrund (8) sich ein zweiter Nutenabschnitt (9) erstreckt, und
mindestens ein in die Nute (5) eingesetztes Befestigungselement (10) mit einem Befestigungsabschnitt (11) und einer Kontaktfläche (12), wobei das Befestigungselement (10) mit der Kontaktfläche (12) an der mindestens einen Anschlagsfläche (6) anschlägt,
wobei die Anschlagsfläche (6) in der Nute (5) einen Anschlag gegen eine Auszugskraft bildet, welche im Wesentlichen rechtwinklig zur Rückseite (4) auf das Befestigungselement (10) wirkt,
**dadurch gekennzeichnet,**
**dass** das Plattenbefestigungssystem (1) weiter mindestens ein in der Nute (5) anordbares Sicherungselement (13) umfasst, wobei das mindestens eine Befestigungselement (10) durch das mindestens eine Sicherungselement (13) gegen eine Bewegung in Richtung der Längsachse (L) gesichert ist.

2. Plattenbefestigungssystem (1) nach Anspruch 1, **dadurch gekennzeichnet, dass** die Nute (5) mindestens ein Endbereich (14) aufweist, wobei das Befestigungselement (11) im Endbereich (14) angeordnet ist, und wobei sich das Sicherungselement (13) vom Befestigungselement (11) in Richtung der Längsachse (L) wegerstreckt.

3. Plattenbefestigungssystem (1) nach Anspruch 1, **dadurch gekennzeichnet, dass** die Nute (5) zwei Endbereiche (14) aufweist,
wobei in jedem der beiden Endbereiche (14) jeweils ein Befestigungselement (10) angeordnet ist, und wobei sich das Sicherungselement (13) vom einen der Befestigungselemente (10) zum anderen der Befestigungselemente (10) erstreckt;
oder nur in einem der beiden Endbereiche (14) ein Befestigungselement (10) angeordnet ist, und wobei sich das Sicherungselement (13) vom Befestigungselement (10) zum gegenüberliegenden Endbereich (14) erstreckt.

4. Plattenbefestigungssystem (1) nach einem der vorhergehenden Ansprüche, **dadurch gekennzeichnet, dass** die Nute (5) eine weitere Anschlagsfläche (16) aufweist und dass das Sicherungselement (13) eine Fläche (17) besitzt, wobei wenn das Sicherungselement (13) in die Nute (5) eingesetzt wird, die Fläche (17) in Kontakt mit der weiteren Anschlagsfläche (16) kommt, derart, dass das Sicherungselement (13) an einer Bewegung in Richtung der Längsachse (L) gehindert ist.

5. Plattenbefestigungssystem (1) nach einem der vorhergehenden Ansprüche, **dadurch gekennzeichnet, dass** die Nute (5) eine Montageöffnung (18) aufweist, über welche das mindestens eine Befestigungselement (10) in die Nute (5) einsetzbar ist, wobei der Durchmesser (D18) der Montageöffnung (18) quer zur Längsachse (L) gesehen im Wesentlichen der Breite (B9) des zweiten Nutenabschnitts (9) entspricht.

6. Plattenbefestigungssystem (1) nach einem der vorhergehenden Ansprüche, **dadurch gekennzeichnet, dass** die Anschlagsfläche (6) der Nut (5) parallel zur Rückseite verläuft oder dass die Anschlagsfläche (6) der Nut (5) winklig geneigt zur Rückseite (4) verläuft.

7. Plattenbefestigungssystem (1) nach einem der vorhergehenden Ansprüche, **dadurch gekennzeichnet, dass** sich die Anschlagsfläche (6) der Nut (5) beidseitig zum ersten Nutenabschnitt (7) erstreckt.

8. Plattenbefestigungssystem (1) nach einem der vorhergehenden Ansprüche, **dadurch gekennzeichnet, dass** das Sicherungselement (13) als mindestens ein Einlegeteil ausgebildet ist.

9. Plattenbefestigungssystem (1) nach Anspruch 8, **dadurch gekennzeichnet, dass** das Einlegeteil mindestens an einer Endseite (19) einen Flächenbereich (20) aufweist, welcher an das mindestens eine Befestigungselement (10) anlegbar ist.

10. Plattenbefestigungssystem (1) nach Anspruch 8 oder 9, **dadurch gekennzeichnet, dass** das Einlegeteil zwei Einlegeabschnitte (21) aufweist, welche über ein Filmscharnier (22) miteinander in Verbindung stehen, wobei die Einlegeabschnitte (21) um das Filmscharnier (22) relativ zueinander verschwenkbar sind, wobei bei zusammengeklappten Einlegeabschnitt (21) das Einlegeteil in die Nute (5) einsetzbar ist und wobei während des Einsetzens die Einlegeabschnitte (21) mit dem Nutengrund (8) in Kontakt bringbar sind, derart, dass die Einlegeabschnitte (21) bei weiterem Einsetzen des Einlegeteils in die Nut in den Bereich zwischen Anschlagsfläche (6) und Nutengrund (8) einschiebbar sind.

11. Plattenbefestigungssystem (1) nach einem der Ansprüche 8 bis 11, **dadurch gekennzeichnet, dass** das Einlegeteil oberseitig einen zylindrischen Abschnitt (23) aufweist, welcher in die Montageöffnung (18) zu liegen kommt.

12. Plattenbefestigungssystem (1) nach einem der vorhergehenden Ansprüche, **dadurch gekennzeichnet, dass** das Sicherungselement (13) weiterhin eine Öffnung (26) aufweist, welche derart angeordnet ist, dass das Sicherungselement (13) ausbaubar ist.

13. Plattenbefestigungssystem (1) nach einem der vorhergehenden Ansprüche 1 bis 8, **dadurch gekennzeichnet, dass** das Sicherungselement (10) eine zähflüssige in die Nute (5) einzubringende Masse ist, welche in der Nute (5) aushärtbar ist.

14. Plattenbefestigungssystem (1) nach einem der vorhergehenden Ansprüche, **dadurch gekennzeichnet, dass** der Befestigungsabschnitt (11) ein Innengewinde aufweist, wobei der Nenndurchmesser des Innengewindes kleiner ist als die Breite des ersten Nutenabschnitts (7); oder dass der Befestigungsabschnitt (11) ein Aussengewinde aufweist, welches sich aus der Nute (5) über die Rückseite hinaus erstreckt.

15. Plattenbefestigungssystem (1) nach einem der vorhergehenden Ansprüche, **dadurch gekennzeichnet, dass** die Nute (5) von der Rückseite (4) bis zum Nutengrund (8) eine Tiefe (T) aufweist, welche derart ausgebildet ist, dass eine Restwanddicke der Platte im Bereich der Nute (5) verbleibt.

16. Verfahren zur Bereitstellung eines Plattenbefestigungssystems (1) nach einem der vorhergehenden Ansprüche, **dadurch gekennzeichnet, dass** in einem ersten Schritt das mindestens eine Befestigungselement (10) in die Nute (5) eingesetzt wird und dass in einem zweiten, dem ersten Schritt nachfolgenden Schritt, das Sicherungselement (13) in der Nute (5) angeordnet wird.

## Claims

1. A panel fastening system (1) comprising
a panel (2), in particular a fiber cement board, having a visible side (3) and a rear side (4),
at least one slot (5) which is introduced into the rear side (4) of the panel (2) and which extends along a longitudinal axis (L), and which has at least one stop face (6), wherein a first slot portion (7) extends between the at least one stop face (6) and the rear side (4), and wherein a second slot portion (9) extends between the at least one stop face (6) and the slot base (8), and
at least one fastening element (10) which is inserted into the slot (5) and which has a fastening portion (11) and a contact face (12), wherein the contact face (12) of the fastening element (10) abuts against the at least one stop face (6),
wherein the stop face (6) in the slot (5) forms a stop against a pulling-out force, which acts on the fastening element substantially at a right angle with respect to the rear side,
**characterized**
**in that** the panel fastening system (1) further comprises at least one securing element (13) which can be arranged in the slot (5), wherein the at least one securing element (13) secures the at least one fastening element (10) against a movement in the direction of the longitudinal axis (L).

2. The panel fastening system (1) as claimed in claim 1, **characterized in that** the slot (5) has at least one end region (14), wherein the fastening element (10) is arranged in the end region (14), and wherein the securing element (13) extends away from the fastening element (10) in the direction of the longitudinal axis (L).

3. The panel fastening system (1) as claimed in claim 1, **characterized in that** the slot (5) has two end regions (14),
wherein a respective fastening element (10) is arranged in each of the two end regions (14), and wherein the securing element (13) extends from one of the fastening elements (10) to the other of the fastening elements (10);
or a fastening element (10) is arranged only in one of the two end regions (14), and wherein the securing element (13) extends from the fastening element (10) to the opposite end region (14).

4. The panel fastening system (1) as claimed in one of the preceding claims, **characterized in that** the slot (5) has a further stop face (16), and **in that** the securing element (13) a face (17), wherein when the securing element (13) is inserted into the slot (5), the face (17) comes into contact with the further stop face (16) in such a way that the securing element (13) is prevented from moving in the direction of the longitudinal axis (L).

5. The panel fastening system (1) as claimed in one of the preceding claims, **characterized in that** the slot (5) has a mounting opening (18) via which the at least one fastening element (10) can be inserted into the slot (5), wherein the diameter (D18) of the mounting opening (18), as seen transverse to the longitudinal axis (L), corresponds substantially to the width (B9) of the second slot portion (9).

6. The panel fastening system (1) as claimed in one of the preceding claims, **characterized in that** the stop face (6) of the slot (5) runs parallel to the rear side, or **in that** the stop face (6) of the slot (5) runs inclined at an angle with respect to the rear side (4).

7. The panel fastening system (1) as claimed in one of the preceding claims, **characterized in that** the stop face (6) of the slot (5) extends on both sides with respect to the first slot portion (7).

8. The panel fastening system (1) as claimed in one of the preceding claims, **characterized in that** the securing element (13) is designed as at least one insert part.

9. The panel fastening system (1) as claimed in claim 8, **characterized in that** the insert part has, at least on one end side (19), a surface region (20) which can be placed against the at least one fastening element (10).

10. The panel fastening system (1) as claimed in claim 8 or 9, **characterized in that** the insert part has two insert portions (21) which are connected to one another by means of a film hinge (22), wherein the insert portions (21) can be pivoted about the film hinge (22) relative to one another, wherein the insert part can be inserted into the slot (5) when the insert portions (21) are in the folded-together state, and wherein, during the insertion operation, the insert portions (21) can be brought into contact with the slot base (8) in such a way that, upon further insertion of the insert part into the slot, the insert portions (21) can be inserted into the region between the stop face (6) and the slot base (8).

11. The panel fastening system (1) as claimed in one of claims 8 to 11, **characterized in that** the insert part has, on the top side, a cylindrical portion (23) which comes to lie in the mounting opening (18).

12. The panel fastening system (1) as claimed in one of the preceding claims, **characterized in that** the securing element (13) furthermore has an opening (26) which is arranged in such a way that the securing element (13) can be removed.

13. The panel fastening system (1) as claimed in one of the preceding claims 1 to 8, **characterized in that** the securing element (10) is a viscous composition which can be introduced into the slot (5) and which can be cured in the slot (5).

14. The panel fastening system (1) as claimed in one of the preceding claims, **characterized in that** the fastening portion (11) has a female thread, wherein the nominal diameter of the female thread is smaller than the width of the first slot portion (7); or **in that** the fastening portion (11) has an external thread which extends out of the slot (5) beyond the rear side.

15. The panel fastening system (1) as claimed in one of the preceding claims, **characterized in that** the slot (5) has, from the rear side (4) as far as the slot base (8), a depth (T) which is designed in such a way that a residual wall thickness of the panel remains in the region of the slot (5).

16. A method for providing a panel fastening system (1) as claimed in one of the preceding claims, **characterized in that**, in a first step, the at least one fastening element (10) is inserted into the slot (5), and **in that**, in a second step subsequent to the first step, the securing element (13) is arranged in the slot (5).

## Revendications

1. Système de fixation de panneau (1) comprenant
un panneau (2), en particulier un panneau de fibres-ciment, avec une face visible (3) et une face arrière (4),
au moins une rainure (5) réalisée dans la face arrière (4) du panneau (2) et s'étendant le long d'un axe longitudinal (L), avec au moins une surface de butée (6), une première section de rainure (7) s'étendant entre l'au moins une surface de butée (6) et la face arrière (4), et une deuxième section de rainure (9) s'étendant entre l'au moins une surface de butée (6) et le fond de rainure (8), et
au moins un élément de fixation (10) inséré dans la rainure (5) avec une section de fixation (11) et une surface de contact (12), l'élément de fixation (10) venant buter avec la surface de contact (12) contre l'au moins une surface de butée (6),
dans lequel la surface de butée (6) dans la rainure (5) forme une butée contre une force d'extraction qui agit sur l'élément de fixation (10) sensiblement perpendiculairement à la face arrière (4),
**caractérisé en ce que**
le système de fixation de panneau (1) comprend en outre au moins un élément de sécurité (13) pouvant être disposé dans la rainure (5), le au moins un élément de fixation (10) étant bloqué par le au moins un élément de sécurité (13) contre un mouvement en direction de l'axe longitudinal (L).

2. Système de fixation de panneau (1) selon la revendication 1, **caractérisé en ce que** la rainure (5) présente au moins une partie d'extrémité (14), l'élément de fixation (11) étant disposé dans la partie d'extrémité (14), et l'élément de sécurité (13) s'étendant depuis l'élément de fixation (11) en direction de l'axe longitudinal (L).

3. Système de fixation de panneau (1) selon la revendication 1, **caractérisé en ce que** la rainure (5) présente deux parties d'extrémité (14),
un élément de fixation (10) étant disposé dans chacune des deux parties d'extrémité (14), l'élément de sécurité (13) s'étendant de l'un des éléments de fixation (10) à l'autre des éléments de fixation (10);
ou un élément de fixation (10) étant disposé seulement dans l'une des deux parties d'extrémité (14), l'élément de sécurité (13) s'étendant de l'élément de fixation (10) à la partie d'extrémité (14) opposée.

4. Système de fixation de panneau (1) selon l'une quelconque des revendications précédentes, **caractérisé en ce que** la rainure (5) présente une autre surface de butée (16) et **en ce que** l'élément de sécurité (13) comporte une surface (17), la surface (17) venant en contact avec l'autre surface de butée (16) lorsque l'élément de sécurité (13) est inséré dans la rainure (5), de telle sorte que l'élément de sécurité (13) est empêché de bouger en direction de l'axe longitudinal (L).

5. Système de fixation de panneau (1) selon l'une des revendications précédentes, **caractérisé en ce que** la rainure (5) présente une ouverture de montage (18) par laquelle l'au moins un élément de fixation (10) peut être inséré dans la rainure (5), le diamètre (D18) de l'ouverture de montage (18), vu transversalement à l'axe longitudinal (L), correspondant essentiellement à la largeur (B9) de la deuxième section de rainure (9).

6. Système de fixation de panneau (1) selon l'une des revendications précédentes, **caractérisé en ce que** la surface de butée (6) de la rainure (5) est parallèle à la face arrière ou **en ce que** la surface de butée (6) de la rainure (5) est inclinée angulairement par rapport à la face arrière (4).

7. Système de fixation de panneau (1) selon l'une des revendications précédentes, **caractérisé en ce que** la surface de butée (6) de la rainure (5) s'étend des deux côtés par rapport à la première section de rainure (7).

8. Système de fixation de panneau (1) selon l'une des revendications précédentes, **caractérisé en ce que** l'élément de sécurité (13) est conçu comme au moins une pièce d'insertion.

9. Système de fixation de panneau (1) selon la revendication 8, **caractérisé en ce que** la pièce d'insertion présente au moins sur un côté d'extrémité (19) une zone de surface (20) qui peut être appliquée contre l'au moins un élément de fixation (10).

10. Système de fixation de panneau (1) selon la revendication 8 ou 9, **caractérisé en ce que** la pièce d'insertion présente deux sections d'insertion (21) qui sont reliées entre elles par une charnière à film (22), les sections d'insertion (21) pouvant pivoter l'une par rapport à l'autre autour de la charnière en film (22), la pièce d'insertion pouvant être insérée dans la rainure (5) lorsque les sections d'insertions (21) sont repliée et les sections d'insertion (21) pouvant être amenées en contact avec le fond de la rainure (8) pendant l'insertion, de telle sorte qu'en continuant l'insertion de la pièce d'insertion, les sections d'insertion (21) puissent être insérées dans la rainure dans la partie située entre la surface de butée (6) et le fond de la rainure (8).

11. Système de fixation de panneau (1) selon l'une des revendications 8 à 11, **caractérisé en ce que** la pièce d'insertion présente sur sa face supérieure une section cylindrique (23) qui vient se placer dans l'ouverture de montage (18).

12. Système de fixation de panneau (1) selon l'une quelconque des revendications précédentes, **caractérisé en ce que** l'élément de sécurité (13) comprend en outre une ouverture (26) qui est disposée de telle sorte que l'élément de sécurité (13) peut être retiré.

13. Système de fixation de panneau (1) selon l'une des revendications précédentes 1 à 8, **caractérisé en ce que** l'élément de sécurité (10) est une masse visqueuse à introduire dans la rainure (5), qui peut être durcie dans la rainure (5).

14. Système de fixation de panneau (1) selon l'une des revendications précédentes, **caractérisé en ce que** la section de fixation (11) présente un filetage interne, le diamètre nominal du filetage interne étant inférieur à la largeur de la première section de rainure (7); ou **en ce que** la section de fixation (11) présente un filetage externe qui s'étend hors de la rainure (5) au-delà de la face arrière.

15. Système de fixation de panneau (1) selon l'une des revendications précédentes, **caractérisé en ce que** la rainure (5) présente, de la face arrière (4) jusqu'au fond de la rainure (8), une profondeur (T) qui est telle qu'il reste une épaisseur de paroi résiduelle du panneau au niveau de la rainure (5).

16. Procédé pour fournir un système de fixation de panneau (1) selon l'une des revendications précédentes, **caractérisé en ce que**, dans une première étape, l'au moins un élément de fixation (10) est inséré dans la rainure (5) et **en ce que**, dans une deuxième étape suivant la première étape, l'élément de sécurité (13) est disposé dans la rainure (5).
